# EUROPEAN PATENT APPLICATION

(11) **EP 3 796 198 A1**
(43) Date of publication of application: **24.03.2021**
(21) Application number: 20193590.5
(22) Date of filing: 31.08.2020
(51) Int. Cl.: G06F 21/60

(54) **COMMUNICATION DEVICE, COMMUNICATION METHOD, COMMUNICATION SYSTEM, AND PROGRAM**

(30) Priority: 20.09.2019 JP 2019171311
(71) Applicant: FUJITSU LIMITED, Kanagawa 211-8588 (JP)
(72) Inventor: Suga, Junichi, Kanagawa, 211-8588 (JP)
(74) Representative: Hoffmann Eitle

(57) **Abstract**

A communication system includes a first communication device, a second communication device, and third communication device. The first communication device configured to generate a transaction that includes a transaction identifier for identifying the transaction and at least one of agreement information for disclosure of personal information, access information for the personal information, a plurality of pieces of history information regarding processing history of an application, and a plurality of history identifiers for identifying the history information, and to transmit the transaction. The second communication device configured to generate a second block that includes the transaction received from the first communication device and a hash value calculated from a first block having generated before generating the second block. The third communication device configured to write the second block to a distributed ledger.

## Description

### [Technical Field]

The embodiments discussed herein are related to a communication device, a communication method, a communication system, and a communication program.

### [Background Art]

In recent years, social problem solutions and business transformation using collected data have been attracting attention. As one of them, an "information bank (information use trust bank)" that appropriately manages and operates personal information trusted by a person has been attracting attention.

An information bank is business that manages personal data by utilizing a system such as a personal data store (PDS), based on a contract or the like regarding data utilization with a person, and provides the data to a third party (another business operator) after determining validity on behalf of the person based on an instruction by the person or a condition designated in advance.

For example, with respect to an information trust function demanded for the information bank, a state of an arbitrary certification system by a private organization or the like has been discussed (for example, Non-Patent Literature 1).

### [Citation List]

### [Non Patent Literature]

[NPL 1] Investigative Commission on Certification Scheme for Information Trust Function "Guideline for Certification of Information Trust Function ver. 1.0", June 2018

### [Summary of Invention]

### [Technical Problem]

However, many consumers feel uneasy to entrust a third party with personal information. In order to popularize information banks, the uneasiness of the consumers is to be dispelled. An object is to provide a system by which the consumers use the information banks at ease.

### [Solution to Problem]

According to an aspect, a communication system is provided that includes a first communication device configured to generate a transaction that includes a transaction identifier for identifying the transaction and at least one of agreement information for disclosure of personal information, access information for the personal information, a plurality of pieces of history information regarding processing history of an application, and a plurality of history identifiers for identifying the history information, and to transmit the transaction, a second communication device configured to generate a second block that includes the transaction received from the first communication device and a hash value calculated from a first block having generated before generating the second block, and a third communication device configured to write the second block to a distributed ledger.

### [Advantageous Effects of Invention]

It is possible to enhance reliability of an information bank, and enable a consumer to entrust the information bank with personal information at ease.

### [Brief Description of Drawings]

FIG. 1 is an example of a system configuration diagram of an information bank system;
FIG. 2 is an example of a sequence diagram of the information bank system when history information is registered with a history management system;
FIG. 3A is an example of a format of a history notification message in the information bank system;
FIG. 3B is an example of a format of a transaction message in the information bank system;
FIG. 3C is an example of a format of a block number request message in the information bank system;
FIG. 3D is an example of a format of a block number notification message in the information bank system;
FIG. 3E is an example of a format of an attached information notification message n the information bank system;
FIG. 4 is an example of a transaction generated by a trail control server;
FIG. 5 is an example of a block generated by an Orderer;
FIG. 6 is an example of data structure of history information registered with a history DB;
FIG. 7 is an example of a sequence diagram of the information bank system when a request for referring to history information is received;
FIG. 8A is an example of a format of a verification request message in the information bank system;
FIG. 8B is an example of a format of a transaction request message in the information bank system;
FIG. 8C is an example of a format of a transaction message in the information bank system;
FIG. 8D is an example of a format of a verification result message in the information bank system;
FIG. 9 is an example of a flowchart when transaction generation determination is performed in the trail control server;
FIG. 10 is an example of a flowchart of the trail control server when history information is registered with the history management system;
FIG. 11 is an example of a functional block diagram of a history control server;
FIG. 12 is an example of a functional block diagram of the trail control server;
FIG. 13 is an example of a functional block diagram of the Orderer;
FIG. 14 is an example of a functional block diagram of a verification server; and
FIG. 15 is an example of a hardware configuration diagram of each of the history control server, the trail control server, the Orderer, and the verification server.

### [Description of Embodiments]

By applying a blockchain to manage agreement information for disclosure of personal information of a consumer, and access information of a business operator to entrusted personal information, tampering the pieces of information is made impossible, and thus it is possible to avoid an information bank from providing the personal information to the business operator without permission.

### [Embodiment 1]

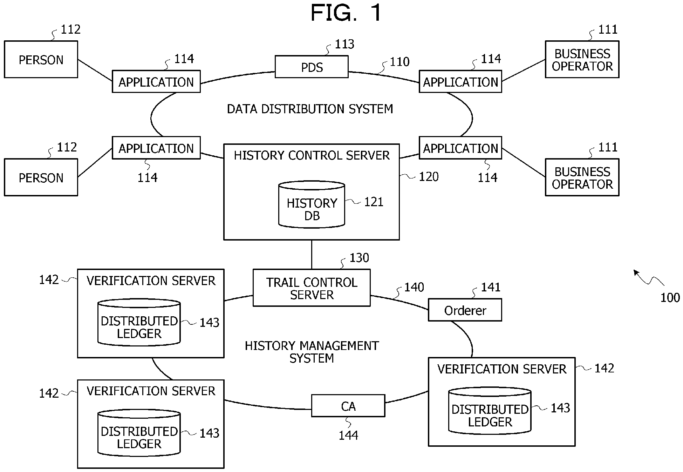

FIG. 1 is an example of a system configuration diagram of an information bank system 100. The information bank system 100 includes a data distribution system 110, a trail control server 130, a history control server 120, and a history management system 140.

The data distribution system 110 is a system that registers personal information of a person 112 with a PDS 113, and provides the personal information registered with the PDS 113 to a business operator 111.

The business operator 111 may access the data distribution system 110 via an application 114 or the like installed in a smart phone or a personal computer (PC). For example, the business operator 111 may request acquisition of personal information registered with the PDS 113, or may receive the requested personal information from the PDS 113.

The person 112 may access the data distribution system 110 via the application 114 or the like installed in a smart phone or a PC. For example, the person 112 may register personal information with the PDS 113, specify a publication range for the personal information, and inquire who accessed the personal information via the application 114 or the like.

The PDS 113 accumulates and manages personal information provided by the person 112.

The history control server 120 receives history information related to processing of the business operator 111, the person 112, and the PDS 113 in the data distribution system 110, and registers the history information with a history database (DB) 121 in association with a history ID for identifying the history information.

Further, the history control server 120 notifies the trail control server 130 of the history information and the history ID. In addition, when receiving attached information (for example, a transaction ID) indicating where the history information is located in a blockchain from the trail control server 130, the history control server 120 registers the attached information with the history DB 121 in association with corresponding history information. A transaction ID is an example of a transaction identifier.

When receiving history information from the history control server 120, the trail control server 130 generates a transaction from the history information. The trail control server 130 transmits the generated transaction to an Orderer 141.

In addition, the trail control server 130 transmits a transaction ID of the generated transaction, and a block number received from a verification server 142 to the history control server 120 as attached information. The trail control server 130 is an example of a first communication device.

In addition, when a request for referring to an access history to provided personal information or the like is made from the person 112, the history control server 120 acquires history information requested to be referred to and attached information from the history DB 121, and notifies the trail control server 130 of the history information and the attached information.

The trail control server 130 acquires a transaction registered with a blockchain based on the attached information, and acquires history information included in the transaction. The trail control server 130 compares the history information received from the history control server 120 with the history information acquired from the blockchain. The trail control server 130, when a comparison result indicates that the pieces of information are the same, determines that the history information stored in the history DB 121 is a history that is valid and not tampered with, and notifies the history control server 120 of the determination.

When the history control server 120 is notified from the trail control server 130 that the history is valid and not tampered with, the history control server 120 acquires the requested history information from the history DB 121 and transmits the history information to the person 112.

With the above mechanism, a user may reliably refer to a history that is not tampered with, and thus may entrust an information bank with data at ease.

The history management system 140 is a system that uses a blockchain technology, and manages history information of respective processes of the business operator 111, the person 112, and the PDS 113 in the data distribution system 110. The history management system 140 uses, for example, a consortium blockchain technology.

The Orderer 141 accumulates one or more transactions received from the trail control server 130, orders the accumulated transactions, and packages the ordered transactions into one block.

The Orderer 141 broadcasts the block for which the packaging is complete to a plurality of the verification servers 142. In addition, the number of transactions that may be entered in one block may be determined based on capacity in the block and time. Demanded time to fix a transaction may be adjusted by an application or the like to be applied. The Orderer 141 is an example of a second communication device.

The verification server 142 writes information of a block received from the Orderer 141 to a distributed ledger 143. The verification servers 142 of the history management system 140 each holds the distributed ledger 143 having the same contents. In addition, blocks are linked in a chain form by hash values, so that tampering is impossible. The verification server 142 is an example of a third communication device.

A certificate authority (CA) 144, for example, uses a mechanism called a membership service provider (MSP) to register information of the verification server 142 and the trail control server 130, and issue a certificate. For example, when the verification server 142 is newly added to the history management system 140, the new verification server 142, in order to participate in a blockchain network, asks the CA 144 for issuing a certificate, and may use the certificate to participate in the blockchain network.

It is also conceivable that, an information bank and a plurality of participating business operators hold the respective verification servers 142 to maintain validity of each history.

As described above, by registering agreement information for disclosure of personal information of a consumer (person 112) and access information of the business operator 111 to entrusted personal information with the blockchain as a transaction, tampering the pieces of information is made impossible, thus the consumer (person 112) may entrust the information bank with the personal information at ease.

### [Embodiment 2]

Incidentally, for a service scale of one information bank system, some tens of thousands of persons are assumed. When, every time any process for these persons occurs, an attempt is made to register the process with a blockchain as a transaction, write performance of a server may not keep up, and a transaction may not be registered with the blockchain. Further, the number of transactions also increases, and capacity of the distributed ledger 143 in each server device (the verification server 142 in FIG. 1) belonging to the blockchain may be bloated.

In order to solve the above-described problem, in Embodiment 2, when receiving processing histories from the history control server 120, the trail control server 130 combines two or more processing histories to generate one transaction, thereby reducing the number of transactions to be registered with the blockchain network of the history management system 140.

A configuration example of the information bank system 100 according to Embodiment 2 will be described with reference to FIG. 1. Note that, since the data distribution system 110 and the history management system 140 are the same as those in Embodiment 1, description thereof will be omitted.

The history control server 120 receives history information of processing of the business operator 111, the person 112, and the PDS 113 in the data distribution system 110, and registers the history information with the history DB (database) 121 in association with a history ID for identifying the history information. The history control server 120 notifies the trail control server 130 of the history information and the history ID. In addition, when receiving attached information (for example, a transaction ID, a history ID, and a block number) indicating where the history information is located in the blockchain from the trail control server 130, the history control server 120 registers the attached information with the history DB 121 in association with a corresponding processing history.

When receiving the history information from the history control server 120, the trail control server 130 calculates a hash value from the history information. The trail control server 130 stores the calculated hash value in its own memory (not illustrated). The trail control server 130 assigns one transaction ID to two or more pieces of history information and two or more history IDs to generate one transaction. The trail control server 130 transmits the generated transaction to an Orderer 141. In addition, the trail control server 130 transmits the history ID and the transaction ID, and a block number received from the verification server 142, to the history control server 120 as attached information.

Additionally, when a request for referring to an access history to provided personal information or the like is made from the person 112, the history control server 120 acquires the history requested to be referred to, and attached information from the history DB 121, and notifies the trail control server 130 of the history and the attached information.

The trail control server 130, based on the block number and the transaction ID included in the attached information, acquires a transaction registered with the blockchain. Further, the trail control server 130 acquires, among hash values of a processing history included in the transaction, a hash value indicated by the history ID included in the acquired attached information. The trail control server 130 compares the history information received from the history control server 120 with the history information acquired from the blockchain. When a comparison result indicates that the pieces of information are the same, the trail control server 130 determines that the history information stored in the history DB 121 is a history that is valid and not tampered with, and notifies the history control server 120 of the determination.

When the history control server 120 is notified from the trail control server 130 that the history is valid and not tampered with, the history control server 120 acquires the requested history information from the history DB and transmits the history information to the person 112.

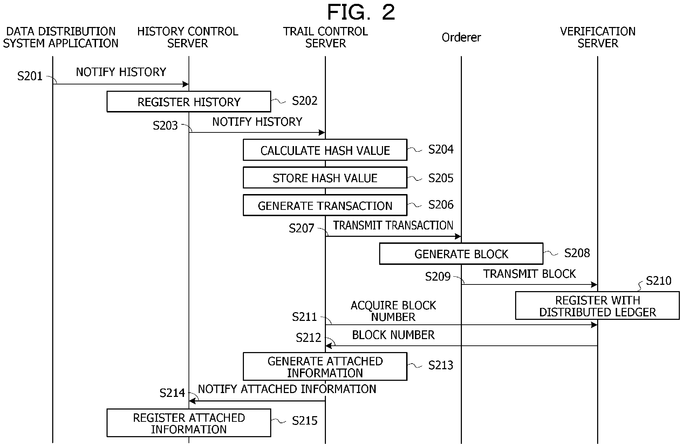

FIG. 2 is an example of a sequence diagram of the information bank system 100, when history information is registered with the history management system 140, when processing by the business operator 111, the person 112, or the PDS 113 occurs in the data distribution system 110.

The history control server 120 receives, from the data distribution system 110 via the application 114 (data distribution system application), occurrence of processing by the business operator 111, the person 112, or the PDS 113. History information notified at this time includes processing contents, processing execution date and time, and the like (S201).

The history control server 120 registers the acquired history information with the history DB 121 in association with a history ID (S202).

The history control server 120 notifies the trail control server 130 of the acquired history information and the history ID corresponding thereto (S203).

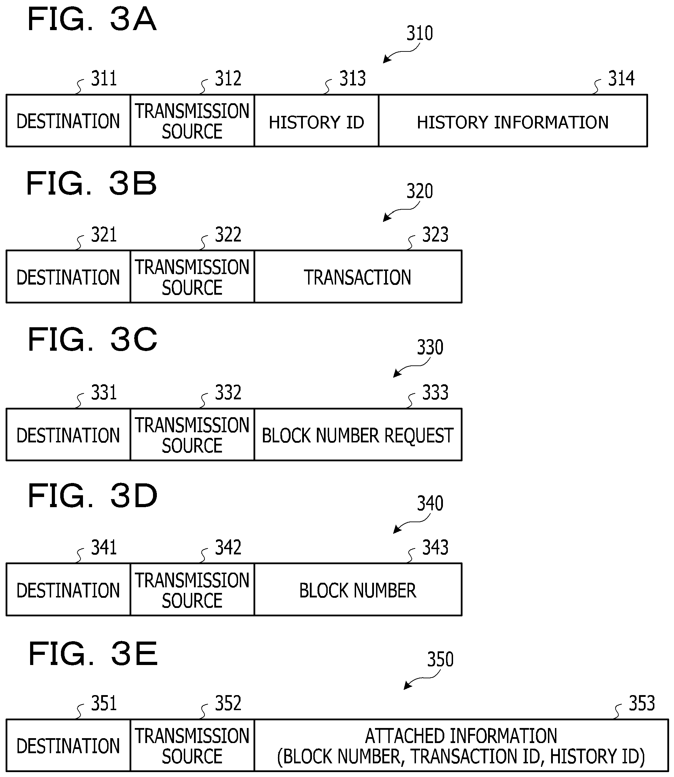

FIG. 3A is a format of a history notification message 310 transmitted from the history control server 120 to the trail control server 130 in step S203. A destination 311 is a destination of the message, and is an address of the trail control server 130, or the like. A transmission source 312 is a transmission source of the message, and is an address of the history control server 120, or the like. A history ID 313 is an identifier registered with the history DB 121 in association with the history by the history control server 120 in step S202, and is used to identify the history. History information 314 is the history information notified in step S201, and includes the processing content, the processing execution date and time, and the like.

In addition, the history ID 313 is an example of a history identifier.

The trail control server 130 calculates a hash value from the history information notified from the history control server 120 by using a hash function (S204).

The trail control server 130 stores the calculated hash value in a memory or the like in association with the history ID (S205).

When the stored hash value reaches or exceeds two, the trail control server 130 associates one transaction ID with a plurality of history IDs and a plurality of hash values, and generates a transaction. After the transaction is generated, the memory is reset (S206).

The trail control server 130 transmits the generated transaction to an Orderer 141. At this time, the trail control server 130 may transmit the generated transaction to the verification server 142, and the verification server 142 may forward the transaction to the Orderer 141 (S207).

FIG. 3B is a format of a transaction message 320 transmitted from the trail control server 130 to the Orderer 141 in step S207. A destination 321 is a destination of the message, and is an address of the Orderer 141, or the like (may be a broadcast address). A transmission source 322 is a transmission source of the message, and is the address of the trail control server 130, or the like. A transaction 323 is the transaction generated in step S206. Details will be described later.

The Orderer 141 generates a block from one or more transactions. The block generation will be described later (S208).

The Orderer 141 broadcasts the generated block to the verification servers 142 in the history management system (S209).

The verification server 142 writes the received block to the distributed ledger 143 (S210).

Accordingly, the respective verification servers 142 share the distributed ledgers 143 having the same contents in a state where tampering is impossible.

On the other hand, the trail control server 130 inquires of the verification server 142 about a block number of the transaction transmitted in step S207 (S211).

FIG. 3C is a format of a block number request message 330 transmitted from the trail control server 130 to the verification server 142 in step S211. A destination 331 is a destination of the message, and is an address of the verification server 142, or the like (may be a broadcast address). A transmission source 332 is a transmission source of the message, and is the address of the trail control server 130, or the like. A block number request 333 indicates that the message is a message requesting a block number that is the latest.

The verification server 142 transmits a block number of a block that is the latest to the trail control server 130 (S212).

FIG. 3D is a format of a block number notification message 340 transmitted from the verification server 142 to the trail control server 130 in step S212. A destination 341 is a destination of the message, and is the address of the trail control server 130, or the like. A transmission source 342 is a transmission source of the message, and is the address of the verification server 142, or the like. A block number 343 is the block number retrieved in step S212. The block number notification message 340 may include a transaction ID and a history ID included in a block corresponding to the block number 343.

The trail control server 130 generates the history ID notified in step S203, a transaction ID of a transaction including the history ID, and a block number of a block including the transaction ID as attached information (S213), and notifies the history control server 120 of the generated attached information (S214).

FIG. 3E is a format of an attached information notification message 350 transmitted from the trail control server 130 to the history control server 120 in step S214. A destination 351 is a destination of the message, and is the address of the history control server 120, or the like. A transmission source 352 is a transmission source of the message, and is the address of the trail control server 130, or the like. Attached information 353 includes the history ID notified in step S203, a transaction ID included in the transaction generated in step S206, and the block number notified in step S212.

The history control server 120 uses the history ID included in the attached information 353 as a key, and stores the history information, the transaction ID, and the block number in association with each other (S215).

By performing the above-described processing, history information of processing occurring in the data distribution system 110 may be registered with a blockchain of the history management system 140, and a history may be managed in a state where tampering is impossible.

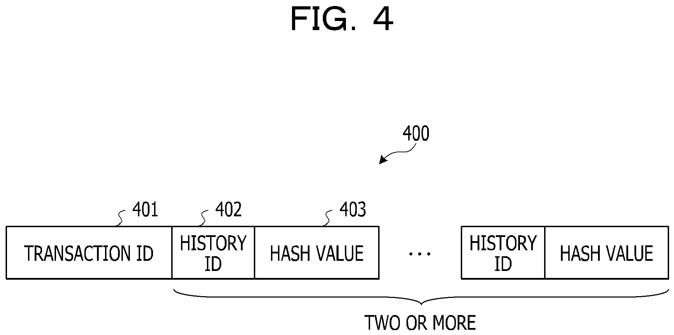

FIG. 4 is an example of a transaction generated by the trail control server 130.

A transaction 400 includes a transaction ID 401, a plurality of history IDs 402, and a plurality of hash values 403. The history ID 402 and the hash value 403 are stored in association with each other, thus it is possible to know that the history ID 402 indicates which of the hash values 403. The hash value 403 is calculated by the trail control server 130, and the trail control server 130 calculates the hash value 403 from history information received from the history control server 120 using the hash function.

At this time, when the history ID 402 is not included in the transaction in association with the hash value 403, the plurality of hash values is associated with one transaction ID. As a result, it is not possible to know which history information is associated with which hash value.

In order to avoid the above problem, as illustrated in FIG. 4, the trail control server 130 associates the history ID 402 with the hash value 403, and further associates the plurality of history IDs 402 and the plurality of hash values 403 with one number of the transaction ID 401 to generate one transaction.

Since one transaction is not generated for one hash value, the number of transactions registered with the blockchain may be reduced.

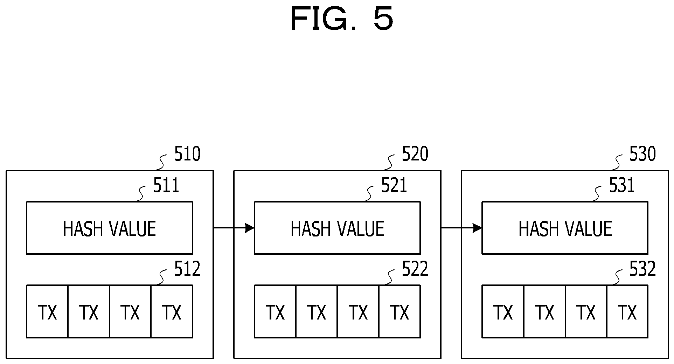

FIG. 5 is an example of a block generated by the Orderer 141.

Blocks 510, 520, and 530 contain hash values 511, 521, and 531, and one or more transactions (TX) 512, 522, and 532, respectively. Each time the Orderer 141 generates one block, the Orderer 141 transmits the block to each the verification server 142.

The block 510 is an example of a first block, and the block 520 is an example of a second block.

Each of the hash values 511, 521, and 531 is a hash value calculated from a block at a previous stage. For example, the hash value 521 is a hash value calculated from the block 510 at a previous stage. Similarly, the hash value 531 is a hash value calculated from the block 520 at a previous stage. In this way, by coupling the blocks using the hash values, tampering of the transaction is made impossible.

Each of the transactions 512, 522, and 532 is the transaction described in FIG. 4. Since the number of transactions to be stored in each of the blocks 510, 520, and 530 may be determined based on capacity in the block and time, it is possible to adjust time demanded to fix a transaction by an application to be applied or the like.

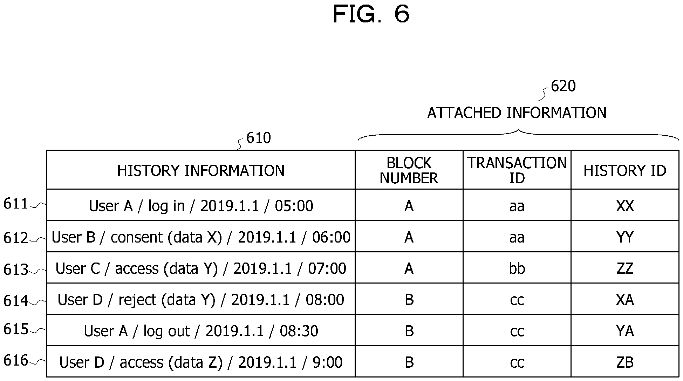

FIG. 6 is an example of data structure of history information registered with the history DB 121, as a result of the processing in FIG. 2.

The history DB 121 stores history information 610 and attached information 620 in association with each other.

The history information 610 is history information of each process such as, for example, date and time when the business operator 111 accesses personal information via the application 114, date and time when the person 112 agrees to disclose personal information, date and time when the business operator 111 or the person 112 logs in to a service provided by the data distribution system 110 via the application 114, or the like.

The attached information 620 is information used to acquire appropriate history information from the blockchain in the history management system 140. For example, the attached information 620 includes a block number, a transaction ID, a history ID, and the like. The block number is information indicating to which block a transaction including a hash value of the history information belongs. The transaction ID is information indicating which transaction includes the hash value of the history information. The history ID is information indicating which hash value among a plurality of hash values included in the transaction is the hash value of the history information.

For example, history information 611 indicates that the person 112 or the business operator 111 identified as a user A logged in to a service provided by the data distribution system 110 at 5 o'clock on Jan. 1, 2019. Further, it may be seen that, in the history management system 140, a hash value of the history information 611 is included in a block having a block number "A", is included in a transaction having a transaction ID "aa", and is managed in association with a history ID "XX".

History information 612 indicates that the person 112 or the business operator 111 identified as a user B agreed to disclose information of data X in the data distribution system 110 at 6 o'clock on Jan. 1, 2019. Further, it may be seen that, in the history management system 140, a hash value of the history information 612 is included in the block having the block number "A", is included in the transaction having the transaction ID "aa", and is managed in association with a history ID "YY".

History information 613 indicates that the person 112 or the business operator 111 identified as a user C acquired data Y from the PDS 113 in the data distribution system 110 at 7 o'clock on Jan. 1, 2019. Further, it may be seen that, in the history management system 140, a hash value of the history information 613 is included in the block having the block number "A", is included in a transaction having a transaction ID "bb", and is managed in association with a history ID "ZZ".

History information 614 indicates that the person 112 or the business operator 111 identified as a user D attempted to acquire the data Y in the data distribution system 110 at 8 o'clock on Jan. 1, 2019, but was not permitted. Further, it may be seen that, in the history management system 140, a hash value of the history information 614 is included in a block having a block number "B", is included in a transaction having a transaction ID "cc", and is managed in association with a history ID "XA".

History information 615 indicates that the person 112 or the business operator 111 identified as the user A logged out from the service provided by the data distribution system 110 at 8:30 on Jan. 1, 2019. Further, it may be seen that, in the history management system 140, a hash value of the history information 615 is included in the block having the block number "B", is included in the transaction having the transaction ID "cc", and is managed in association with a history ID "YA".

History information 616 indicates that the person 112 or the business operator 111 identified as the user D acquired data Z from the PDS 113 in the data distribution system 110 at 9 o'clock on Jan. 1, 2019. Further, it may be seen that, in the history management system 140, a hash value of the history information 616 is included in the block having the block number "B", is included in the transaction having the transaction ID "cc", and is managed in association with a history ID "ZB".

For example, when a consumer requests to refer to history information, it is conceivable that the history information illustrated in FIG. 6 is transmitted as it is, but it is difficult to prove that the data stored in the history DB 121 illustrated in FIG. 6 is true history information that is not tampered with. Accordingly, the consumer (person 112) feels anxious that actual processing for personal information in an information bank system may be different information from a history of processing history disclosed to the consumer (person 112).

In order to solve the above problem, a hash value of history information managed using a blockchain is used to provide history information that is guaranteed not to be tampered with to a consumer.

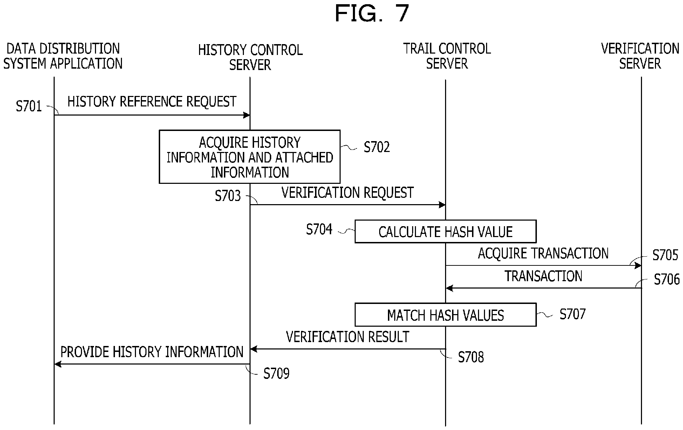

FIG. 7 is an example of a sequence diagram of the information bank system 100 when a request to refer to history information is received from the business operator 111 or the person 112.

The history control server 120 receives a history reference request from the business operator 111 or the person 112 via the application 114 (data distribution system application). This history reference request includes a type and period of a history that the business operator 111 or the person 112 wants to refer to (S701).

The history control server 120 acquires history information indicated by the received history reference request, and attached information stored in association with the history information from the history DB 121 (S702).

The history control server 120 transmits a verification request including the history information and the attached information acquired from the history DB 121 to the trail control server 130 (S703).

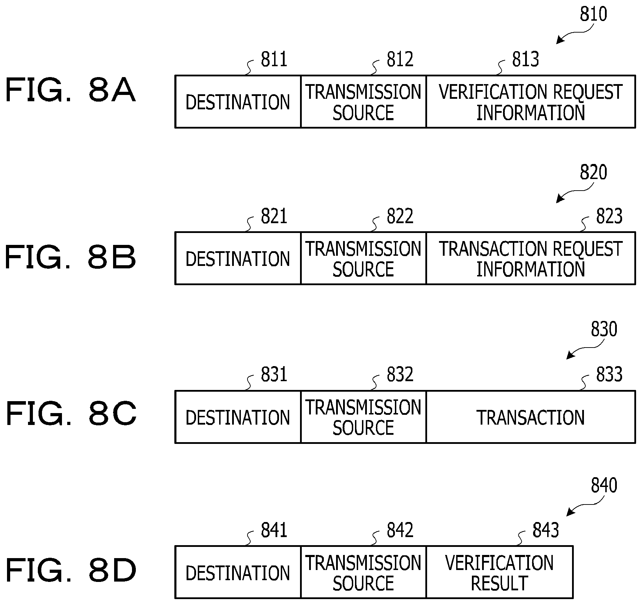

FIG. 8A is a format of a verification request message 810 transmitted from the history control server 120 to the trail control server 130 in step S703. A destination 811 is a destination of the message, and is the address of the trail control server 130, or the like. A transmission source 812 is a transmission source of the message, and is the address of the history control server 120, or the like. Verification request information 813 includes an identifier indicating that the message is a verification request, and the history information and the attached information acquired from the history DB 121. The verification request message 810 is an example of the verification request.

The trail control server 130 calculates a hash value from the history information included in the verification request information 813 using the hash function. The trail control server 130 stores the calculated hash value in the memory. At this time, a history ID and the hash value may be stored in association with each other (S704).

The trail control server 130 requests the verification server 142 for a transaction that is included in a block having a block number included in the attached information, and is identified by a transaction ID (S705).

FIG. 8B is a format of a transaction request message 820 transmitted from the trail control server 130 to the verification server 142 in step S705. A destination 821 is a destination of the message, and is the address of the verification server 142, or the like (may be a broadcast address). A transmission source 822 is a transmission source of the message, and is the address of the trail control server 130, or the like. A transaction request information 823 includes an identifier indicating that the message is a transaction request message, a block number, and a transaction ID.

The verification server 142 refers to the distributed ledger 143, acquires a transaction indicated by the transaction ID from the block indicated by the block number, and transmits the acquired transaction to the trail control server 130 (S706).

FIG. 8C is a format of a transaction message 830 transmitted from the verification server 142 to the trail control server 130 in step S706. A destination 831 is a destination of the message, and is the address of the trail control server 130, or the like. A transmission source 832 is a transmission source of the message, and is the address of the verification server 142, or the like. A transaction 833 is as described in FIG. 4.

The trail control server 130 extracts a hash value corresponding to the history ID acquired from the history control server 120, from the acquired transaction. The extracted hash value is compared with the hash value stored in the memory in step S704 to verify whether the hash values are the same or not (S707).

When a comparison result indicates that the hash values are the same, the trail control server 130 notifies the history control server 120 that the history is correct. When the comparison result indicates that the hash values are different from each other, the trail control server 130 notifies the history control server 120 that the history may be tampered with (S708).

FIG. 8D is a format of a verification result message 840 transmitted from the trail control server 130 to the history control server 120 in step S708. A destination 841 is a destination of the message, and is the address of the history control server 120, or the like. A transmission source 842 is a transmission source of the message, and is the address of the trail control server 130, or the like. A verification result 843 includes a history ID and information indicating whether history information corresponding to the history ID is correct or incorrect.

When receiving a notification that the history is correct, the history control server 120 transmits the history information acquired in step S702 to the history reference request source via the application 114 as history information that is not tampered with. Alternatively, the history control server 120 uses the history ID included in the verification result message 840 as a key, to acquire history information from the history DB 121, and transmits the history information to the history reference request source as the history information that is not tampered with (S709).

When receiving a notification indicating that the history may be tampered with, the history control server 120 may transmit a notification indicating that the history may be tampered with to the history reference request source via the application 114.

In this manner, the consumer (person 112) is provided with history information that is guaranteed not to be tampered with.

According to Embodiment 2, since the number of transactions registered with the blockchain of the history management system 140 may be reduced, a service may be provided regardless of processing performance of the trail control server 130, the Orderer 141, and the verification server 142. Further, according to Embodiment 2, since the number of transactions to be written to the distributed ledger 143 of each the verification server 142 may be reduced, it is possible to avoid the capacity of the distributed ledger 143 from bloating.

### [Embodiment 3]

The trail control server 130 according to Embodiment 2 generates one transaction from two or more pieces of history information. In Embodiment 3, a condition that triggers the trail control server 130 to generate a transaction will be described.

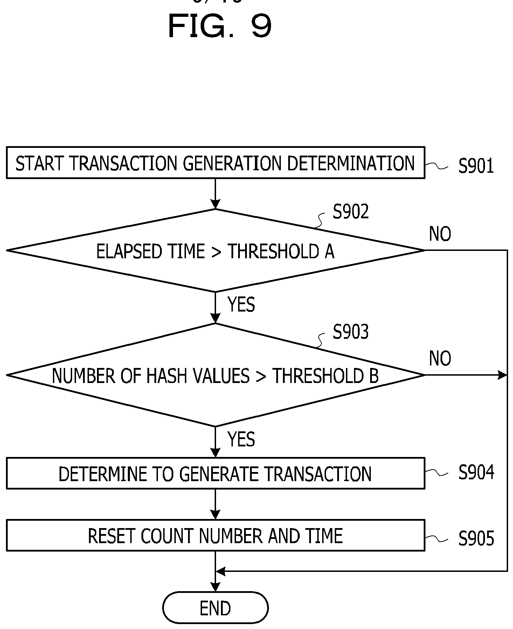

FIG. 9 is an example of a flowchart when transaction generation determination is performed in the trail control server 130.

The trail control server 130 starts the transaction generation determination. The transaction generation determination may be started at a predetermined cycle, or may be started after history information is received from the history control server 120, and a hash value calculated from the received history information is stored in the memory (S901).

The trail control server 130 refers to a timer, and calculates elapsed time since a previous transaction was generated. Whether the calculated elapsed time exceeds a preset threshold A or not is determined (S902). When the elapsed time does not exceed the threshold A, the transaction generation determination ends (S902: NO).

When the elapsed time exceeds the threshold A (S902: YES), the trail control server 130 refers to a counter, calculates the number of hash values stored in the memory, and determines whether the calculated number of hash values exceeds a preset threshold B or not (S903). When the calculated number of hash values does not exceed the threshold B, the transaction generation determination ends (S903: NO).

When the conditions in step S902 and step S903 are satisfied (S903: YES), the trail control server 130 determines to use a plurality of hash values stored in the memory at that time to generate one transaction (S904).

The trail control server 130 resets a count number in the counter, and time in the timer (S905).

It is also possible that only one of the conditions in steps S902 and S903 is adopted. For example, when the processing performance of the trail control server 130 is low, setting the threshold A in step S902 to be long enables provision of services regardless of the processing performance. In addition, when it is desired to avoid the distributed ledger 143 from bloating, setting the threshold B in step S903 to be large makes it possible to avoid the distributed ledger 143 from bloating.

According to Embodiment 3, by using the elapsed time or the number of hash values as the condition that triggers the trail control server 130 to generate a transaction, it is possible to design a system appropriate for consumers.

### [Embodiment 4]

Incidentally, there are many types of history information in the data distribution system 110. Among them, there is history information for which history reference requests are frequently made, and there is history information for which history reference requests are not frequently made. In addition, for the person 112, there is history information that causes trouble when tampered with, and there is history information that does not cause trouble even when tampered with. In Embodiment 4, whether to generate one transaction for one history, or to generate one transaction for a plurality of histories is determined, depending on types of history information.

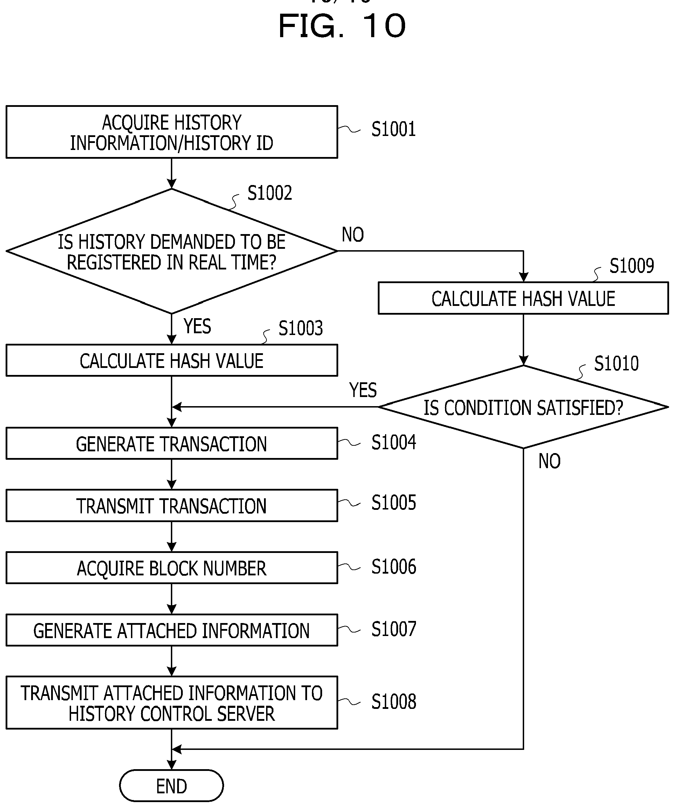

FIG. 10 is an example of a flowchart of the trail control server 130 when history information is registered with the history management system 140.

The trail control server 130 acquires history information and a history ID from the history control server 120 (S1001).

The trail control server 130 refers to the acquired history information. Whether the history information is demanded to be registered with a blockchain in real time or not is determined (S1002).

History information that is demanded to be registered with the blockchain in real time is, for example, history information that causes trouble for the person 112 when tampered with. Specifically, agreement information for disclosure of personal information, and access information of the business operator 111 to entrusted personal information, and the like may be cited. The trail control server 130 may have a table for determining whether registration with a blockchain in real time is demanded or not, for each type of history information.

When the registration in real time is demanded (S1002: YES), the trail control server 130 calculates a hash value (S1003), and generates one transaction including one transaction ID for the calculated one number of the hash value (S1004).

Since the generated transaction includes only one number of the hash value, a history ID is not demanded to be included in the transaction.

The trail control server 130 transmits the generated transaction to the Orderer 141, in order to register the generated transaction with the blockchain (S1005).

The trail control server 130 acquires a block number for identifying a block including the transmitted transaction from the verification server 142 (S1006).

The trail control server 130 generates attached information including the acquired block number, a transaction ID of the transaction, and a history ID (S1007).

At this time, when only one hash value is included in the transaction, the history ID is not demanded to be included in the attached information.

The trail control server 130 transmits the generated attached information to the history control server 120 (S1008).

On the other hand, in step S1002, when the acquired history is not demanded to be registered in real time (S1002: NO), the trail control server 130 calculates a hash value from the acquired history, and stores the calculated hash value in the memory in association with a history ID (S1009).

The trail control server 130 determines whether a condition for generating a transaction from the hash value stored in the memory is satisfied or not (S1010). This condition may be equivalent to that in Embodiment 3. When the condition is not satisfied, the trail control server 130 ends the processing (S1010: NO).

When the condition is satisfied (S1010: YES), a transaction is generated from a plurality of the hash values stored in the memory. The generated transaction includes the plurality of hash values, history IDs corresponding to the respective hash values, and one transaction ID (S1004).

Hereinafter, description of the processes in step S1005 to step S1008 is omitted.

According to Embodiment 4, since it is possible to avoid tampering in real time for a history having a high level of importance, it is possible to further enhance reliability of an information bank system.

In addition, in an information bank system, it is very important to ensure that agreement information for disclosure of personal information, and access information of the business operator 111 to entrusted personal information is not tampered with. This is because disclosing information to the business operator 111 as having agreed even though the consumer (person 112) does not agree, or allowing access from the business operator 111 who is not allowed to access is an anxiety factor for the consumer. By guaranteeing that these pieces of information have not been tampered with and being able to disclose them to a consumer (person 112), it is possible to improve reliability of an information bank system and promote the data utilization of personal information.

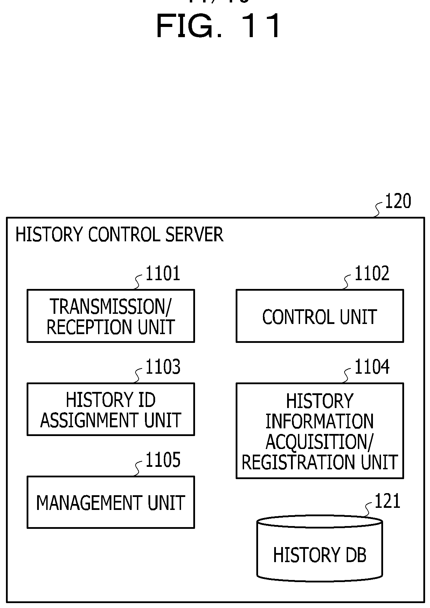

FIG. 11 is an example of a functional block diagram of the history control server 120 according to Embodiment 1 to Embodiment 4.

The history control server 120 includes the history DB 121, a transmission/reception unit 1101, a control unit 1102, a history ID assignment unit 1103, a history information acquisition/registration unit 1104, and a management unit 1105.

As described with reference to FIG. 6, the history DB 121 stores history information and attached information in association with each other. In addition, the history DB 121 may be provided separately from the history control server 120.

The transmission/reception unit 1101 has a function of transmitting and receiving various messages.

The control unit 1102 has a function of generating various messages by assigning destinations, and the like, and checking messages received by the transmission/reception unit 1101.

The history ID assignment unit 1103 has a function of assigning a history ID for identifying history information received via the transmission/reception unit 1101.

The history information acquisition/registration unit 1104 has a function of acquiring history information and attached information from the history DB 121, and registering history information received via the transmission/reception unit 1101 and a history ID assigned by the history ID assignment unit 1103 with the history DB 121 in association with each other.

The management unit 1105 has a function of managing a destination of a message (for example, the destination of the trail control server 130), and the like, transmitted and received via the transmission/reception unit 1101.

Note that each of the above-described functions may be realized by executing a program installed in the history control server 120 by a processor, or the like.

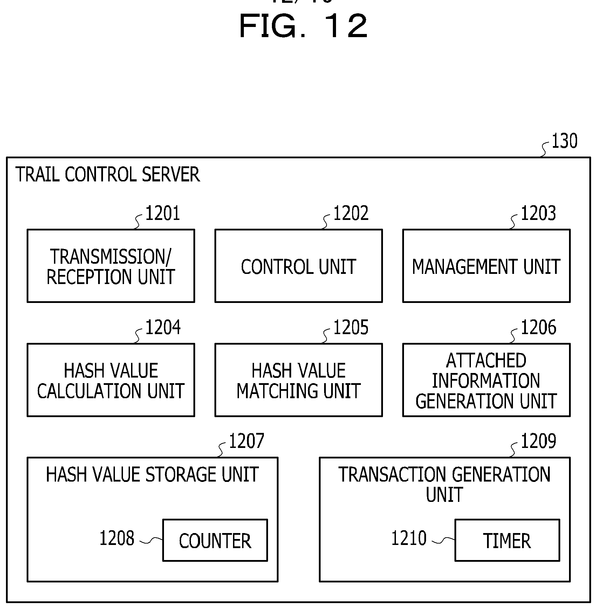

FIG. 12 is an example of a functional block diagram of the trail control server 130 according to Embodiment 1 to Embodiment 4.

The trail control server 130 includes a transmission/reception unit 1201, a control unit 1202, a management unit 1203, a hash value calculation unit 1204, a hash value matching unit 1205, an attached information generation unit 1206, a hash value storage unit 1207, a counter 1208, a transaction generation unit 1209, and a timer 1210.

The transmission/reception unit 1201 has a function of transmitting and receiving various messages.

The control unit 1202 has a function of generating various messages by assigning destinations, and the like, and checking messages received by the transmission/reception unit 1201.

The management unit 1203 has a function of managing destinations of messages (for example, the respective destinations of the history control server 120, the Orderer 141, and the verification server 142), and the like, transmitted and received via the transmission/reception unit 1201.

The hash value calculation unit 1204 calculates a hash value from history information received via the transmission/reception unit 1201 using the hash function. A hash value is a character string having a predetermined size converted from history information, and has a characteristic that it is difficult to restore original data from the hash value. Further, pieces of history information that are even slightly different from each other are converted into respective hash values different from each other.

The hash value matching unit 1205 has a function of comparing a hash value received from the verification server 142 via the transmission/reception unit 1201 with a hash value calculated from history information acquired from the history control server 120, and determining whether the history information received from the history control server 120 is correct or not.

The attached information generation unit 1206 generates attached information by associating a block number, a transaction ID, and a history ID received from the verification server 142.

The hash value storage unit 1207 stores the hash value calculated by the hash value calculation unit 1204. When a transaction is generated from the stored hash value, the hash value storage unit 1207 deletes the stored hash value.

The counter 1208 counts the number of hash values stored in the hash value storage unit 1207. The counter 1208 clears the count each time a transaction is generated.

The transaction generation unit 1209 has a function of determining timing of generating a transaction, and generating the transaction. The transaction generation unit 1209 determines whether a predetermined condition is satisfied or not. For example, as described in Embodiment 3 and Embodiment 4, timing of generating a transaction is determined according to the respective values of the counter 1208 and the timer 1210, or a level of importance of history information.

The transaction generation unit 1209 generates a transaction by associating values related to one or more pieces of history information with a transaction ID. Further, the transaction generation unit 1209 generates a transaction by associating a plurality of pieces of history information, history IDs for identifying the respective pieces of history information, and one transaction ID.

The timer 1210 measures time elapsed since a transaction was generated by the transaction generation unit 1209. The timer 1210 is reset each time a transaction is generated.

Note that each of the above-described functions may be realized by executing a program installed in the trail control server 130 by a processor, or the like.

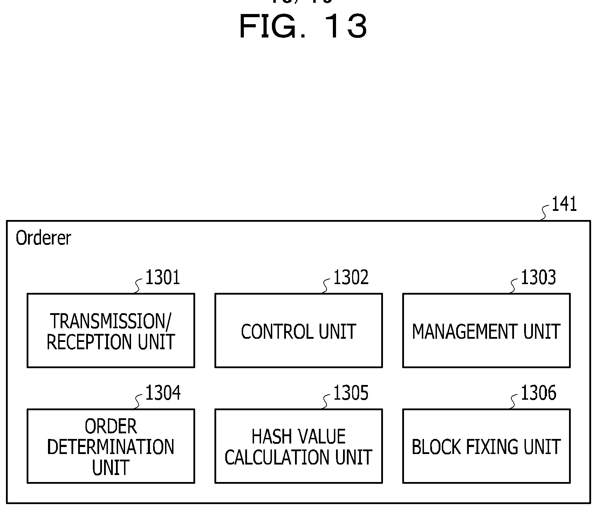

FIG. 13 is an example of a functional block diagram of the Orderer 141 according to Embodiment 1 to Embodiment 4.

The Orderer 141 includes a transmission/reception unit 1301, a control unit 1302, a management unit 1303, an order determination unit 1304, a hash value calculation unit 1305, and a block fixing unit 1306.

The transmission/reception unit 1301 has a function of transmitting and receiving various messages.

The control unit 1302 has a function of generating various messages by assigning destinations, and the like, and checking messages received by the transmission/reception unit 1301.

The management unit 1303 has a function of managing destinations of messages (for example, the respective destinations of the trail control server 130 and the verification server 142), and the like, transmitted and received via the transmission/reception unit 1301.

The order determination unit 1304 has a function of determining an order of transactions received via the transmission/reception unit 1301.

The hash value calculation unit 1305 has a function of calculating a hash value of a generated block using the hash function, and including the calculated hash value in a block generated next.

The block fixing unit 1306 has a function of including a hash value of an immediately preceding block calculated by the hash value calculation unit 1305, and a transaction having an order determined by the order determination unit 1304 in the block, and fixing the block.

Note that each of the above-described functions may be realized by executing a program installed in the trail control server 130 by a processor, or the like.

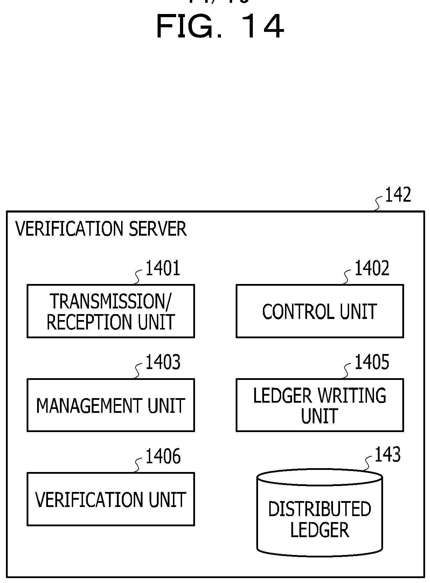

FIG. 14 is an example of a functional block diagram of the verification server 142 according to Embodiment 1 to Embodiment 4.

The verification server 142 includes a transmission/reception unit 1401, a control unit 1402, a management unit 1403, a ledger writing unit 1405, a verification unit 1406, and the distributed ledger 143.

The transmission/reception unit 1401 has a function of transmitting and receiving various messages.

The control unit 1402 has a function of generating various messages by assigning destinations, and the like, and checking messages received by the transmission/reception unit 1401.

The management unit 1403 has a function of managing destinations of messages (for example, the respective destinations of the trail control server 130 and the other verification server 142), and the like, transmitted and received via the transmission/reception unit 1401.

The ledger writing unit 1405 writes block information received via the transmission/reception unit 1401 to the distributed ledger 143.

The verification unit 1406 verifies validity of a received transaction. Although not described in the embodiments, for example, before transmitting a transaction to the Orderer 141, the trail control server 130 may transmit the transaction to the verification server 142, confirm validity of the transaction, and then request the Orderer 141 to register the transaction.

The distributed ledger 143 stores blocks written in the ledger writing unit 1405. The distributed ledger 143 is common to all the verification servers 142 of the history management system 140.

Note that each of the above-described functions may be realized by executing a program installed in the trail control server 130 by a processor, or the like.

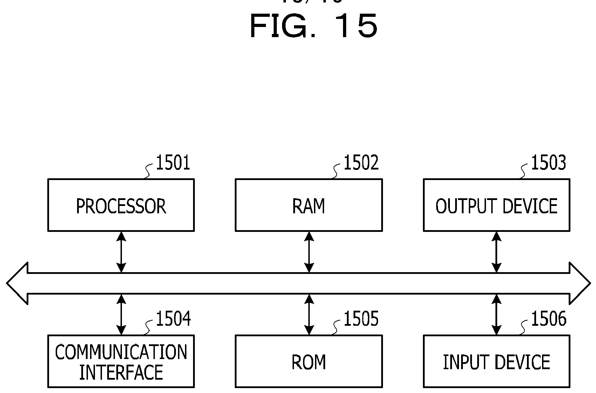

FIG. 15 is a hardware configuration diagram of each of the history control server 120, the trail control server 130, the Orderer 141, and the verification server 142 according to Embodiment 1 to Embodiment 4.

A processor 1501 is hardware for executing an instruction set (data transfer, calculation, processing, control, management, and the like) described in a software program, and includes an arithmetic unit, a register for storing instructions and information, a peripheral circuit, and the like. In addition, the processor 1501 implements functions of the respective functional units of the history control server 120, the trail control server 130, the Orderer 141, and the verification server 142, by executing a program stored in a read-only memory (ROM) 1505 over a random-access memory (RAM) 1502.

The RAM 1502 is a working main memory used when the processor 1501 performs processing, or displays data over an output device 1503. Data in the RAM 1502 is rewritable, and disappears when power is turned off.

An output device 1503 is a device that receives data from a program being executed, and physically presents the data to an outside in a form recognizable by a human. Examples include a display (monitor) and a projector that project an image of light to project a screen, a printer and a plotter that perform printing on paper or the like, a speaker and an earphone that generate sound, and the like.

A communication interface 1504 is a device for coupling to a network, and communicating with each device.

The ROM 1505 is a memory from which recorded information may only be read. For example, the ROM 1505 stores firmware, a BIOS, software, and the like.

An input device 1506 is a device for providing data, information, instructions, and the like to a program being executed. Examples include a keyboard, a mouse, a touch panel, and the like that convert movement of human fingers or key typing into specific signals, and transmit the signals to a computer.

In Embodiment 1 to Embodiment 4, the history control server 120 and the trail control server 130 are described as separate devices, but these functions may also be realized by one device.

## Claims

1. A communication system, comprising:
a first communication device configured to generate a transaction that includes a transaction identifier for identifying the transaction and at least one of agreement information for disclosure of personal information, access information for the personal information, a plurality of pieces of history information regarding processing history of an application, and a plurality of history identifiers for identifying the history information, and to transmit the transaction;
a second communication device configured to generate a second block that includes the transaction received from the first communication device and a hash value calculated from a first block having generated before generating the second block; and
a third communication device configured to write the second block to a distributed ledger.

2. A program for causing a computer to execute a process, the process comprising:
receiving a transaction including a transaction identifier for identifying the transaction and at least one of agreement information for disclosure of personal information, access information for the personal information, a plurality of pieces of history information regarding processing history of an application, and a plurality of history identifiers for identifying the history information;
generating a second block that includes the transaction and a hash value being calculated from first block having generated before generating the second block; and
transmitting the second block.

3. A program for causing a computer to execute a process, the process comprising:
generating a first transaction that includes a plurality of pieces of history information regarding processing histories of an application, a plurality of history identifiers for identifying the history information, and one transaction identifier for identifying the first transaction; and
transmitting the first transaction to another communication device.

4. The program according to claim 3, wherein
the history information is a hash value.

5. The program according to claim 3 or 4, the process further comprising:
receiving a request to verify validity of history information;
acquiring a second transaction that includes a history identifier from any communication device in a network to which the other communication device belongs, based on the history identifier for identifying the history information that is requested to be verified; and
determining, by comparing history information included in the second transaction with history information that is requested to be verified, that the history information is valid when the pieces of history information are the same.

6. The program according to any of claims 3 to 5, wherein the process further comprising
after a predetermined period of time has elapsed since the first transaction was generated, generating a third transaction that is new transaction.

7. The program according to any of claims 3 to 6, the process further comprising
acquiring, every time processing is generated in an application, history information regarding a history of the processing, wherein
when a predetermined number or more of the pieces of history information are acquired, generates a forth transaction for the predetermined number of pieces of history information, the forth transaction is new transaction.

8. The program according to any of claims 3 to 7, wherein further process:
determining whether to generate the first transaction that includes one piece of history information or to generate the first transaction that includes a plurality of pieces of history information, in accordance with a level of importance of the history information.

9. A communication method, comprising:
generating a transaction that includes one transaction identifier for identifying a transaction and at least one of agreement information for disclosure of personal information, access information for the personal information, or at least one of a plurality of pieces of history information regarding processing history of an application and a plurality of history identifiers for identifying the history information; and
transmitting the transaction to another communication device.

10. A communication device, comprising:
a processor configured to generate a transaction that includes transaction identifier for identifying the transaction and at least one of agreement information for disclosure of personal information, access information for the personal information, or at least one of a plurality of pieces of history information regarding processing history of an application and a plurality of history identifiers for identifying the history information; and
a transmitter configured to transmit the transaction to another communication device.
